# EUROPÄISCHE PATENTSCHRIFT

(11) **EP 2 870 092 B1**
(45) Veröffentlichungstag und Bekanntmachung des Hinweises auf die Patenterteilung: **15.06.2016**
(21) Anmeldenummer: 13731765.7
(22) Anmeldetag: 26.06.2013
(51) Int. Cl.: B65G 57/03, B65G 57/10, B65G 57/22

(54) **VORRICHTUNG ZUM MEHRLAGIGEN BESTAPELN EINER UNTERLAGE**
DEVICE FOR LAYERED STACKING ON A SUPPORT
DISPOSITIF POUR EMPILER DES ARTICLES EN PLUSIEURS COUCHES SUR UN SUPPORT

(30) Priorität: 06.07.2012 DE 102012106111
(43) Veröffentlichungstag der Anmeldung: 13.05.2015
(73) Patentinhaber: Dematic GmbH, 63073 Offenbach (DE)
(72) Erfinder: CAVELIUS, Jörg, 61118 Bad Vilbel (DE)
(74) Vertreter: Moser Götze & Partner Patentanwälte mbB
(86) Internationale Anmeldenummer: PCT/EP2013/063343
(87) Internationale Veröffentlichungsnummer: WO 2014/005894

(56) Entgegenhaltungen:
- EP-B1- 1 462 394
- FR-A- 1 441 128
- GB-A- 1 214 025

## Beschreibung

Die Erfindung betrifft eine Vorrichtung zum automatischen Stapeln von Packstücken auf einer Unterlage in einer vorbestimmten räumlichen Anordnung zur Ausbildung eines Stapels nach Anspruch 1.

Das automatische Bestapeln einer Unterlage oder eines Trägers, insbesondere einer Palette oder eines Rollwagens, mit Packstücken zum Ausbilden eines Stapels zum späteren Versand, also das "Palettieren" ist an sich bekannt. Hierbei werden jedoch Packstücke mit uniformer Größe bzw. Ausmaß durch Roboter, Greifer etc. auf rechnerisch bestimmte Plätze abgelegt.

Bei dem Prozess des automatischen Beladens eines Ladungsträgers mit Packstücken unterschiedlicher Ausprägung zum Ausbilden eines Stapels handelt es sich dagegen um das sogenannte automatische "mixed-case" Palettieren.

In der heutigen Distributionslogistik werden immer größere Anforderungen an die Kommissionierung gestellt. Es ist daher notwendig Kommissioniersysteme zu entwickeln, die automatisch ohne manuelles Einwirken Aufträge abarbeiten.

Tausende von verschiedenen Produkten (bzw. Packstücke) unterschiedlichster Ausprägung (Größe, Form, Gewicht, Abmessungen, Oberflächen etc.) müssen mit solchen Systemen automatisch kommissioniert werden.

Hierbei müssen unterschiedliche Aspekte berücksichtigt werden, die die Komplexität gegenüber dem "einfachen" manuellen Stapeln einfacher regelmäßiger Geometrien enorm erhöhen. So kann ein nachfolgendes Packstück nur gut auf ein vorheriges Packstück gestapelt bzw. abgelegt werden, wenn diese eine flache bzw. ebene Oberfläche aufweist, die zudem etwa waagerecht ausgerichtet sein sollte, und wenn das Packstück das Gewicht der auf ihm abgelegten weiteren Packstücke ohne Beschädigung tragen kann.

Ferner sollte der gebildete Stapel eine gewisse Stabilität aufweisen, u. a. damit er beim Transport nicht umfällt. Eine Umwicklung mit Folie hilft zwar, kann aber nicht alleine einen fehlerhaft gebildeten Stapel stabilisieren.

Zudem wird abnehmerseitig immer häufiger eine Optimierung der Stapel aufgrund der gewünschten Entladereihenfolge gewünscht.

Das Stapeln unterschiedlicher Packstücke bzw. Waren unterschiedlicher Größe bzw. Ausmaß erfolgt daher meist noch von Hand, da die Anforderungen an die Stabilität des Stapels, die Packungsdichte innerhalb des Stapels und die Reihenfolge der Beladung sowie die dabei bedingte Entladungsreihefolge und nicht zuletzt die Stapelbarkeit der Waren extrem hoch sind und bisher nicht auch nur teilweise von den bekannten Verfahren und Vorrichtungen erfüllt werden.

Aus der EP 1 462 394 B1 ist eine gattungsgemäße Vorrichtung zum automatischen Beladen eines Ladungsträgers mit einem Ladestapel bildenden Packeinheiten, also eine Vorrichtung zum Palettieren bekannt. Bei der Vorrichtung werden die Packeinheiten auf Tablaren lagernd und vereinzelt zugeführt und von diesen auf einen Packtisch abgelegt. Dort wird die Packeinheit auf dem Tisch liegend von einem Pusher entlang der Breitseite der zu beladenden Palette verschoben, bis die Beladungskoordinaten in X-Richtung erreicht sind. Anschließend schieben ein weiterer Pusher und eine Beladezunge simultan die Packeinheit in Richtung der Ladetiefe über die Palette bis die Beladungskoordinaten in Z-Richtung erreicht sind. Anschließend fährt die Beladezunge zurück, wobei der Pusher stehen bleibt und als Abstreifer dient, so dass die Packeinheit auf der Palette an der gewünschten Stelle "frei fallend" abgesetzt wird. Dabei wird der sich bildende Stapel von einer Beladehilfe an den übrigen drei Seiten gestützt. Es wird also quasi "gegen die Wand" gestapelt. Das Verschieben auf dem Packtisch ist allerdings zeitaufwendig und hat aufgrund der eingeschränkten Zugänglichkeit Nachteile bei der Bildung der Packmuster. Zudem ist zwingend, dass die Beladezunge und der Abstreifer/Pusher simultan in X-Richtung verfahren. Auch kann immer nur eine Packeinheit sequentiell "bearbeitet" werden.

Aus der WO 2010/059923 A1 ist eine automatische Robotor-gestützte Vorrichtung zum Stapeln bekannt, bei der eine Zwischenplatte für das Ausbilden der ersten Lage eines Stapels und gleichzeitigem Paletten-Wechsel verwendet wird.

Demgegenüber besteht die Aufgabe der vorliegenden Erfindung ein Verfahren und eine Vorrichtung zum automatischen Stapeln von Packstücken auf einen Träger in einer vorbestimmten räumlichen Anordnung zur Ausbildung eines Stapels bereitzustellen, das bzw. die auf flexible Weise eine mixed-case Bestapelung mit hohem Durchsatz erlaubt.

Diese Aufgabe wird durch die in Anspruch 1 wiedergegebene Vorrichtung gelöst. Vorteilhafte Ausgestaltungen ergeben sich aus den Unteransprüchen und der Beschreibung.

Erfindungsgemäß ist der Positionierförderer als Verfahrwagen oder Shuttle ausgebildet, der auf in X-Richtung längs des Stapelplatzes bzw. der Unterlage dafür angeordneten Schienen hin- und her fahrbar ist und jeweils ein Packstück an die vorgesehene X-Position transportiert.

Vorzugsweise ist der Verfahrwagen mit einem C-förmigen Gestell ausgebildet, so dass dann die mindestens eine Schiebeplatte zwischen die Schenkel des "C" hindurchgreifen kann, so dass keine gegenseitige Behinderung ergibt. Dies erlaubt es auch, dass der Verfahrwagen nach erfolgter "Übergabe" des Packstücks an die Schiebeplatte vor Beendigung des Stapelvorgangs bereits zurück zur Übernahme des nächsten Packstücks vom Zuführförderer fährt. Die eigentliche Trägerfläche für das Packstück ist also nur an einer Seite an dem Fahrgestell des Verfahrwagens befestigt und kragt von dort aus.

Damit die Packstücke nicht vom Verfahrwagen herunterfallen und genau positioniert werden, weist dieser auf der in X-Richtung dem Zuführförderer abgewandten Seite einen Anschlag auf. In einer besonders bevorzugten Ausführungsform ist der Anschlag aus der Anschlagstellung weg bewegbar, vorzugsweise abklappbar bzw. verschwenkbar, so dass der Verfahrwagen nach erfolgter "Übergabe" des Packstücks an die Schiebeplatte (vgl. oben) bereits das nächste Packstück "holen" kann.

Der Anschlag ist also aus der Anschlagstellung weg bewegbar ausgestaltet. Vorzugsweise ist dazu der Anschlag um eine Achse aus der Anschlagstellung in eine Freigabestellung schwenkbar. Diese Ausführung benötigt wenig Platz und "kollidiert" auch nicht mit den Schiebeplatten. Sinnvoll ist es, wenn der Anschlag zwei gegenläufig verschwenkbare Anschlagflügel aufweist, um einen breiten Anschlag bzw. Fläche bereitzustellen.

Wenn kein einzelner Pusher wie im Stand der Technik verwendet wird, sondern der Pusher als Anordnung einer Mehrzahl horizontal und längs der Seite des Stapelplatzes angeordneter Einzelpusher ausgebildet ist, also als Batterie ausgebildet ist, die das Abschieben der Packstücke von dem Positionierförderer in Richtung auf den Stapel vornehmen, wobei die Einzelpusher unabhängig von der mindestens einen Schiebeplatte in Z-Richtung verfahrbar sind, um das Packstück beim Zurückziehen der Schiebeplatte zurückzuhalten, können die Packstücke noch variabler positioniert werden und zudem mehrere Packstücke mit weniger Zeitversatz oder sogar gleichzeitig gestapelt werden.

In einer besonders bevorzugten Variante weisen nicht alle Einzelpusher einen eigenen Antrieb auf, sondern haben mindestens einen, vorzugsweise zwei gemeinsame Antriebe, der/die wahlweise mit einem bestimmten Einzelpusher zu dessen Antrieb kuppelbar sind. Dazu kann der Antrieb verfahrbar sein und über ein Kupplungselement in Eingriff mit einem Antriebsschlitten des bzw. der jeweiligen (benachbarten) Einzelpushers gelangen.

Die Einzelpusher sind also an einem Gestell aufgehangen, an dem sie in Z-Richtung auf den Stapel zu (oder weg) beweglich sind. Sie werden dazu von einem quer dazu, also in X-Richtung, verlaufenden oberhalb angeordneten Schlitten oder Traverse, der den Antrieb trägt, angefahren, wobei ein Kupplungs- oder Mitnehmerelement dabei die Wirkverbindung zwischen Antrieb und Einzelpusher herstellt. Das Mitnehmerelement hängt dabei blatt- oder streifenförmig von dem Antrieb bzw. dessen Verfahrtraverse nach unten und greift in eine nach oben offene Nut am Antriebsschlitten des bzw. der benachbarten Einzelpusher ein, wozu der Mitnehmer eine entsprechende Breite aufweist.

Vorzugsweise sind zwei solche verfahrbare Gemeinschaftsantriebe vorgesehen, einer von jeder Seite in X-Richtung des Gestells bzw. Stromaufwärts und Stromabwärts in X-Richtung zum Stapelplatz her kommend bzw. positioniert.

Die Anordnung der Einzelpusher kann sich über die gesamte Länge des Positionierförderers erstrecken, dann können die Einzelpusher in X-Richtung bzw. Förderrichtung des Positionierförderers unbeweglich ausgestaltet werden. Alternativ ist es auch denkbar, entsprechend weniger Einzelpusher, aber mindestens zwei, vorzusehen und diese dann zum Ausgleich in X-Richtung verstellbar auszugestalten.

In einer bevorzugten Ausführungsform ist die mindestens eine Schiebeplatte als horizontal und längs der Seite des Stapelplatzes und quer dazu beweglich ausgebildete flache streifenförmige Platte ausgebildet, die in Richtung des Stapelplatzes dünner zuläuft. Die Schiebeplatte ist auf der dem Träger gegenüberliegenden Seite des Positionierförderers aufgehängt. Sie ist dort ggf. am selben Gestell wie die Einzelpusher befestigt. Sind mehr als eine Schiebeplatte vorhanden, können diese parallel und nebeneinander angeordnet werden.

Bevorzugt ist es, wenn die mindestens eine Schiebeplatte jeweils auf einer in Z-Richtung ausgerichteten Linearachse schlittenartig vor- und zurück beweglich ist. Somit kann sie auf einfache Weise in die benötigte Z-Richtung zum Stapel hin ausgefahren bzw. zurückgefahren werden und ist trotzdem steif genug durch die lange Auflagefläche bzw. Anzahl der Auflagepunkte. Der Antrieb kann z.B. über einen Zahnriemen, eine Zahnstange usw. erfolgen.

Es versteht sich, dass die Schiebeplatte je nach Ausgestaltung des Positionierförderers unter diesen oder durch diesen hindurch greift, um ein Packstück auf der anderen Seite im Stapel zu positionieren.

Auch ist es möglich, die mindestens eine Schiebeplatte in Längsrichtung (X-Richtung) des Positionierförderers beweglich auszugestalten, insbesondere dann, wenn nur eine oder wenige, vorzugsweise zwei Schiebeplatten vorgesehen sind. Dann können diese gemeinsam oder unabhängig voneinander beweglich sein. Wenn sie voneinander unabhängig beweglich sind, können mehrere Packstücke gleichzeitig auf den Träger bzw. in den Stapel verlagert werden.

Alternativ können entsprechend der Anzahl der Einzelpusher auch entsprechend viele Schiebeplatten gleichmäßig über die Länge des Positionierförderers verteilt sein. Dann ist eine Verstellbarkeit in X-Richtung nicht notwendig. Jede Schiebeplatte ist dann bevorzugt einem Einzelpusher "zugeordnet" und mit dem Einzelpusher in einer vertikalen Ebene angeordnet, d.h. von oben besehen übereinander fluchtend angeordnet. Die Schiebeplatten können analog der Einzelpusher (siehe oben) ebenfalls mit gemeinsamen Antrieben ausgestaltet sein.

Es ist ebenfalls möglich, ausgewählte Einzelpusher gemeinsam anzusteuern, so dass z.B. zwei bis vier benachbarte Einzelpusher gleichzeitig gemeinsam ein größeres Packstück bewegen. Entsprechend können auch die Schiebeplatten gemeinsam angesteuert werden.

Um eine konstruktiv einfache und nicht behindernde Aufhängung bereitzustellen, ist es sinnvoll, wenn die Anordnung der Einzelpusher an einem sich oberhalb des Positionier-Förderers erstreckenden Gestell befestigt ist. Das Gestell ruht dabei vorzugsweise auf schienenartigen Profilen und dient auch als eine Auflage oder Aufhängung für die Schiebeplatten. Somit bildet das Gestell zusammen mit der Anordnung der Einzelpusher und der Schiebeplatten eine modulare Pusher-Schiebeplatten-Einheit aus.

Bei automatischen Anlagen und Vorgängen von hoher Komplexität wie die vorliegende kommt es trotz aller Planungen zu Störungen, z.B. weil ein Packstück beim Stapeln umfällt. Dann ist ein manueller Eingriff durch eine Bedienperson notwendig. Um deren Eingreifen zu ermöglichen bzw. erleichtern, ist in einer Ausführungsform daher vorgesehen, dass Gestell mit der Einheit aus Pusher und Schiebeplatten gemeinsam von dem Stapelplatz weg beweglich ist, was manuell oder angetrieben erfolgen kann. Vorzugsweise ist die Einheit dazu schienenartig verschiebbar, insbesondere über einen Antrieb. Vorzugsweise ist der Antrieb eine Spindel, die manuell oder Motor getrieben ist. Sinnvoll ist es ebenfalls, wenn der Positionierförderer am Gestell befestigt ist, so dass dieser ebenfalls "entfernbar" ist. Diese Möglichkeit der manuellen Störbeseitigung bzw. Beladung erhöht die Verfügbarkeit der Vorrichtung.

Zwischen dem Zuführförderer und dem Positionierförderer kann ein Umsetzer für die Packstücke angeordnet sein. Dieser kann als Pusher ausgestaltet sein. Dabei ist es möglich, dass der Pusher gemeinsam mit dem Verfahrwagen das Packstück an die gewünschte X-Position transportiert, so dass das Packstück quasi zwischen Pusher und seitlichem Anschlag des Verfahrwagens "eingeklemmt" transportiert wird. Somit sind hohe Beschleunigungen und Geschwindigkeiten bei der Positionierung ohne eine Gefahr des Verschiebens, Herabfallens usw. möglich.

Somit ist in einer Variante der Pusher (Umsetzer) an einer sich längs des Trägers erstreckenden und parallel zum Positionierförderer verlaufenden Schiene beweglich aufgehangen und angetrieben.

Es ist jedoch auch denkbar, dass der Zuführförderer die Packstücke direkt auf den Positionierförderer aufbringt ohne Zwischenschaltung eines Umsetzers. In einer Variante endet der Zuführförderer dazu senkrecht zum Positionierförderer und "schiebt" die Packstücke direkt auf den Positionierförderer auf.

Insgesamt ist es so möglich, die Bestapelung des Trägers flexibel und mit hoher Leistung durchzuführen. Insbesondere kann ein breites Spektrum an unterschiedlichen Packstücken kontinuierlich gestapelt werden. Es können also neben den selbstverständlich ebenfalls handhabbaren gleichförmigen wenig anspruchsvollen Packstücken Packstücke mit unterschiedlichsten Abmessungen nacheinander auf den Träger gestapelt werden.

Als Packstücke kommen unterschiedlichste Waren, verpackte Waren, in Gruppen verpackte Waren, wie Kartons, Kisten, Kästen, Behälter, Waren auf Tablaren, Packeinheiten, wie z.B. Folien-Merfachverpackungen von Kunststofflaschen etc., als auch einzelne Artikel aller Art in Frage.

Als Unterlage kommen Zwischenplatten oder Träger, wie Paletten auch Rollwagen, oder ähnliche Unterlagen für Stückgüter und deren Verpackungen in Frage.

Unter Zuführförderer werden Förderer im Allgemeinen und insbesondere Rollenförderer, Förderbänder und Fördersysteme verstanden. Diese können manuell oder automatisch beschickt werden. Die Packstücke werden vereinzelt und in der richtigen Reihenfolge für die gewünschte Packsequenz auf der Fördertechnik angedient. Die richtige Reihenfolge wird rechnerisch bei der Abarbeitung eines Auftrags ermittelt. Entsprechende Software dazu ist bekannt. Die Besonderheit liegt darin, dass die Packstücke auf dem Zuführförderer ohne Hilfsmittel, wie Tablaren, Behälter etc, angedient werden.

Die Packstücke werden also vereinzelt angeliefert. Es ist jedoch auch möglich, Gruppen von identischen oder sehr ähnlichen verpackten oder unverpackten Packstücken zur gemeinsamen Handhabung zu gruppieren. Diese Gruppierung erfolgt dann entweder im Bereich der Übernahme der Packstücke von dem Zuführförderer durch die Verlagerungsmittel oder bereits beim Beschicken des Zuführförderers. Aufgrund der besonderen Ausgestaltung des Pushers als Batterie können gerade solche Packstücke gemeinsam verlagert bzw. positioniert werden.

Günstig ist es auch, wenn die Packstücke vor der Übernahme durch die Verlagerungsmittel ausgerichtet werden. Dies erlaubt eine standardisierte und somit vereinfachte Übernahme der Packstücke durch die Verlagerungsmittel. Alternativ oder zusätzlich können auch entsprechende optische Verfahren zur Erkennung der Ausrichtung der Packstücke und Steuerung der Verlagerungsmittel verwendet werden, um mit diesen die Ausrichtung zu erreichen. Die Ausrichtung kann z.B. durch den Umsetzer erfolgen. Auch der bewegliche Anschlag kann zum Ausrichten verwendet werden.

Sinnvoll ist es, wenn der Stapel auf dem Träger beim und/oder nach dem Stapeln stabilisiert wird. Somit behalten die einzelnen Schichten ihren Aufbau und der bestapelte Träger lässt sich sicherer transportieren.

Zum Stabilisieren nach dem Stapeln (vollständig oder einzelner Schichten) kann der Stapel zusammen mit dem bestapelten Träger durch Umwickeln mit einer Folie, Netz oder dergleichen stabilisiert werden. Das Umwickeln kann dabei schichtweise nach und nach beim Bestapeln bzw. nach dem Bestapeln einer Schicht erfolgen. Hierbei findet die Stabilisierung innerhalb der eigentlichen Vorrichtung zum Bestapeln statt. Der bereits teilweise bestapelte Träger wird schichtenweise abgesenkt, um das Niveau zum Stapeln anzupassen. Dies wird ausgenutzt, da so bereits gebildete Schichten des Stapels "nach unten rutschen" und unterhalb des Stapelniveaus schichtweiseumwickelt werden können, während "oben" weiter gestapelt wird. Dies erspart Zeit. Hierzu ist eine Folienwickelvorrichtung direkt in die Vorrichtung integriert. Das hat den Vorteil, dass der Träger mit gebildetem Stapel nicht gesondert bewegt werden muss. So kann nach jedem Absenken einer Lage oder Schicht bereits eine Stabilisierung erfolgen. Dies hat zur Folge, dass selbst bei eigentlich nicht völlig stabil bestapelten Trägern eine große Stabilität des Stapels erreicht werden kann. Dies erweitert auch die Möglichkeiten der Stapelbildung bezüglich der Waren und der wählbaren Reihenfolge erheblich.

Selbstverständlich können alternativ zur Folienwickeltechnik alle anderen bekannten Möglichkeiten der Stabilisierung verwendet werden. Dazu gehören z.B. Folienschrumpfen, Netze und andere dehnbare Materialien sowie Klett- und Klebeverbindungen usw.

Bei Stapeln selber kann eine Stabilisierung durch seitliche, U-förmig um den Stapelplatz bzw. Träger angeordnete seitliche Wände erfolgen, so dass "gegen die Wand" gestapelt werden kann. Sowohl die Seitenwände als auch die hintere Seitenwand können vertikal und/oder horizontal bzgl. des Stapelplatzes verstellbar bzw. verfahrbar sein. Somit können unterschiedlich große Träger usw. beladen werden und die Wände als Abstreifer im Zusammenhang mit Zwischenplatten dienen.

Je nach zu stapelnden Packstücken kann es zu deren Schutz oder zur Erhöhung der Stapelbarkeit usw. notwendig sein, Lagen, z.B. aus Karton oder Pappe, zwischen, unterhalb oder oberhalb der Schichten einzulegen. Hierzu kann das flächige Material in geeigneter Weise bevorratet und/oder angeliefert sowie mit an den Handhabungsmitteln vorgesehenen Saugern aufgelegt werden.

Sowohl die Träger (z.B. Paletten) als auch die Lagen (Pappen) können über eine gesonderte Fördertechnik angeliefert und bereitgestellt werden. Die Übernahme bzw. Übergabe der Träger bzw. Lagen kann mit dedizierter Technik erfolgen.

In einer Ausführungsform ist vorgesehen, dass auf dem Niveau des Positionierförderers oberhalb des zu beladenden Trägers eine Zwischenplatte vorgesehen ist. Die Zwischenplatte stellt eine einheitliche glatte Fläche für die Stapelbildung bereit und erlaubt ein Weiterstapeln trotz Trägerwechsel.

Die Zwischenplatte ist vorzugsweise mittig geteilt und jeder Teil zur Seite hin verschiebbar ausgestaltet.

In einer Variante wird die erste Lage eines Stapels auf der Zwischenplatte gebildet, während der komplett beladene Träger des vorherigen Stapelvorgangs darunter gegen einen neuen leeren Träger getauscht wird. Somit kann der Stapelvorgang ohne Unterbrechung fortgesetzt werden. Ist die erste Schicht gebildet und der neue Träger anwesend, werden die Teile zur Seite gefahren und die erste Schicht so auf den darunter liegenden Träger überführt, auf dem anschließend weitergestapelt wird.

In einer bevorzugten Alternative findet der komplette Stapelvorgang auf der Zwischenplatte statt und diese ist dazu höhenveränderlich ausgebildet. Dies hat den Vorteil, dass die Übergabe an den Träger erst nach der Bestapelung stattfindet und dieser nicht "getauscht" werden muss. Dadurch wird der Gesamtdurchsatz der Vorrichtung erhöht. Zudem ist so die ggf. vorgesehene Umwicklung mit Stretchfolie einfacher Auszuführen.

Beim Auseinanderbewegen bzw. Öffnen der Zwischenplatte dienen die seitlichen Stabilisierungs-Wände als Abtreifer, d.h. die Zwischenplatte bewegt sich seitlich unterhalb der unteren Ränder der Wände.

Vermehrt wird die Bereitstellung der gestapelten Packstücke in sogenannten Rollwagen oder Rollcontainer gefordert. Diese können leicht in Lastwagen geladen und Vorort entladen und bewegt werden, da sie Rollen aufweisen. Zudem besitzen sie Seitenwände, die eine stabile Bestapelung und gute Stabilisierung durch Stretchfolie erlauben, so dass der Transport ebenfalls sicher ist. Allerdings bringen diese Eigenschaften Schwierigkeiten beim automatischen Bestapeln mit sich.

Erfindungsgemäß ist erkannt worden, dass eine automatische Bestapelung zuverlässig möglich ist, wenn die Seitenwände des Rollwagens durch eine Aufspreizeinrichtung zumindest senkrecht oder sogar leicht schräg nach Außen aufgebogen gehalten werden. Die Seitenwände haben nämlich die Eigenschaft, sich nach Innen aufeinander zu zu bewegen.

Weiter hat sich herausgestellt, dass die Bestapelung von Rollwagen erleichtert werden kann, wenn hierfür eine gesonderte und ggf. höhenverstellbare Zwischenplatte vorgesehen ist, die auf der dem Positionierförderer abgewandten Seite des Stapelplatzes bzw. des Trägers angeordnet ist bzw. von dieser Seite in den Rollwagen einführbar ist.

Somit können mit der erfindungsgemäßen Vorrichtung je nach Belieben abwechselnd Paletten etc. oder Rollwagen bestapelt werden.

Als Abstreifer beim Übergeben des fertig gestapelten Stapels an den Rollwagen durch Zurückziehen der weiteren Zwischenplatte kann die hintere Seitenwand dienen. In einer Ausgestaltungsform ist die hintere Seitenwand zudem Höhenverfahrbar und/oder in Richtung des Positionierförderers beweglich, so dass unterschiedlich große Rollwagen verwendbar sind.

Diese dient vorzugsweise auch als Anbringungsort für die Aufspreizeinrichtung.

Die Aufspreizeinrichtung besteht vorzugsweise aus zwei auf gleicher Höhe im Bereich der erwarteten Seitenwände des Rollwagens angeordneter von der Seitenwand nach vorne in den Rollwagenraum vorstehender Zapfen, die seitlich nach Außen zum Aufspreizen verlagerbar sind. Vorzugsweise sind die Zapfen dazu jeweils auf einer vertikal ausgerichteten Drehscheibe in der hinteren Seitenwand angeordnet.

Zum einfachen Transport und Handhabung innerhalb des Systems werden die Rollwagen auf Transportpaletten bewegt, die sich wie normale Paletten handhaben lassen.

Weitere Details der Erfindung ergeben sich aus der nachfolgenden Beschreibung von Ausführungsbeispielen anhand der Zeichnung, in der
- Fig. 1: eine schematische perspektivische Ansicht von einer Seite auf eine Vorrichtung zum automatischen mehrlagigen Bestapeln von Paletten;
- Fig. 2: eine schematische perspektivische Ansicht auf die Vorrichtung aus Figur 1 aus einem anderen Blickwinkel;
- Fig. 3: eine schematische perspektivische Ansicht auf die Verlagerungsmittel der Vorrichtung aus Figur 1 beim Übernehmen eines Packstücks;
- Fig. 4: eine schematische perspektivische Ansicht auf die Verlagerungsmittel der Vorrichtung aus Figur 1 beim Transportieren des Packstücks in X-Richtung;
- Fig. 5: eine schematische perspektivische Ansicht auf die Verlagerungsmittel der Vorrichtung aus Figur 1 beim beginnenden Transportieren des Packstücks in Z-Richtung;
- Fig. 6: eine schematische perspektivische Ansicht auf die Verlagerungsmittel der Vorrichtung aus Figur 1 beim beginnenden Transportieren des Packstücks in Z-Richtung aus einem anderen Blickwinkel;
- Fig. 7: eine schematische perspektivische Ansicht auf die Verlagerungsmittel der Vorrichtung aus Figur 1 beim weiteren Transportieren des Packstücks in Z-Richtung;
- Fig. 8: eine schematische perspektivische Ansicht auf die Verlagerungsmittel der Vorrichtung aus Figur 1 beim Beenden des Transportierens des Packstücks in Z-Richtung;
- Fig. 9: eine schematische perspektivische Ansicht auf die Verlagerungsmittel der Vorrichtung aus Figur 1 nach dem Beenden des Transportierens des Packstücks in Z-Richtung;
- Fig. 10: eine vergrößerte Detailansicht des gemeinsamen Antriebs der Einzelpusher;
- Fig. 11: eine vergrößerte Detailansicht des Verfahrwagens;
- Fig. 12: eine schematische perspektivische und vergrößerte Ansicht auf die Vorrichtung aus Figur 1 im Bereich des Stapelplatzes beim Beenden des Stapelvorgangs;
- Fig. 13: eine schematische perspektivische und vergrößerte Ansicht auf die Vorrichtung aus Figur 1 im Bereich des Stapelplatzes bei der Übergabe des Stapels von der Zwischenplatte auf eine Palette;
- Fig. 14: eine schematische perspektivische und vergrößerte Ansicht auf die Vorrichtung aus Figur 1 im Bereich des Stapelplatzes beim Absenken des Stapels;
- Fig. 15: eine schematische perspektivische und vergrößerte Ansicht auf die Vorrichtung aus Figur 1 im Bereich des Stapelplatzes beim Umwickeln des Stapels mit Folie und Abtransport;
- Fig. 16: eine schematische perspektivische Ansicht auf die Vorrichtung beim automatischen mehrlagigen Bestapeln von Rollwagen im Bereich des Stapelplatzes beim Stapeln;
- Fig. 17: eine schematische perspektivische Ansicht auf die Vorrichtung aus Figur 16 an einem anderen Blickwinkel, wobei die hintere Stabilisierungswand zur besseren Ansicht weggelassen ist;
- Fig. 18: eine vergrößerte Ansicht auf die Vorrichtung aus Figur 16 beim Aufspreizen der Rollwagenseitenwände und
- Fig. 19: eine Detailansicht des Mechanismus zum Aufspreizen der Rollwagenseitenwände.

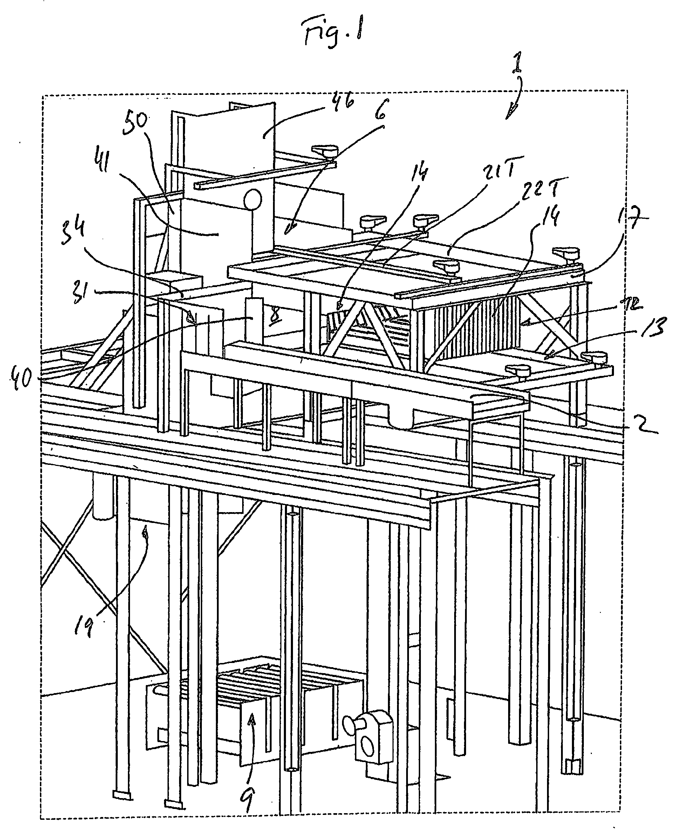

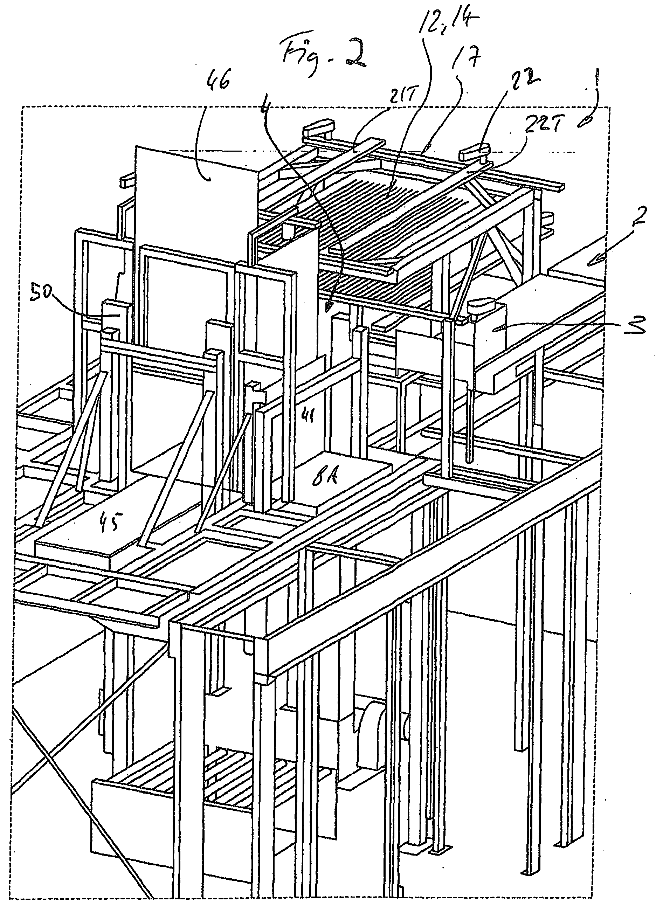

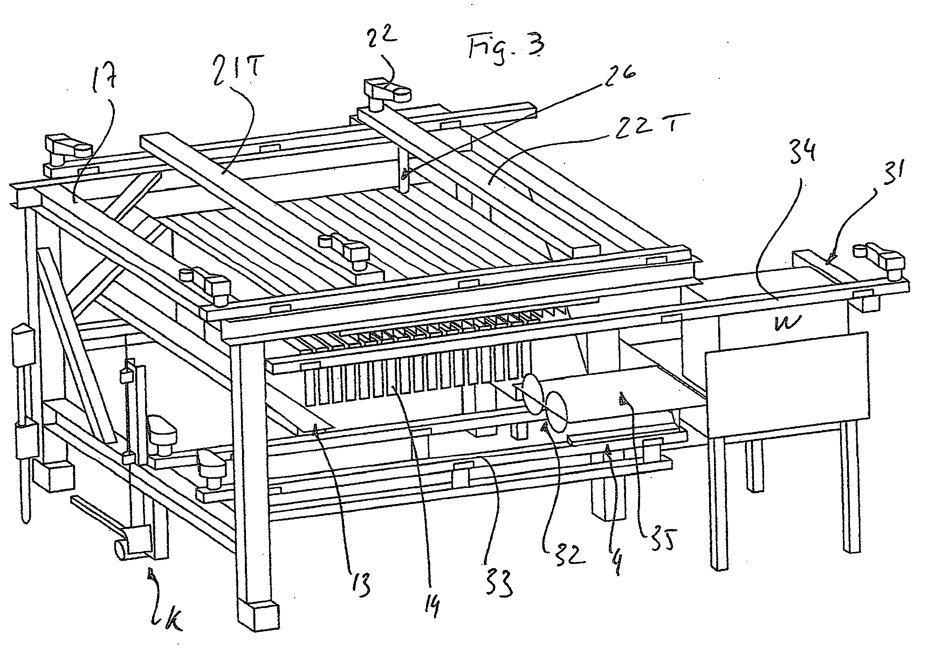

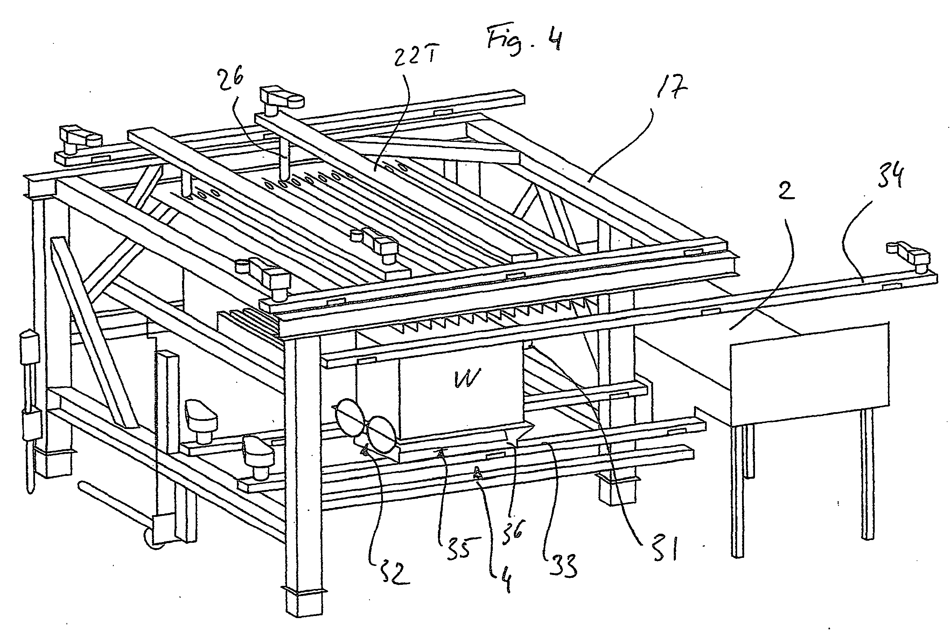

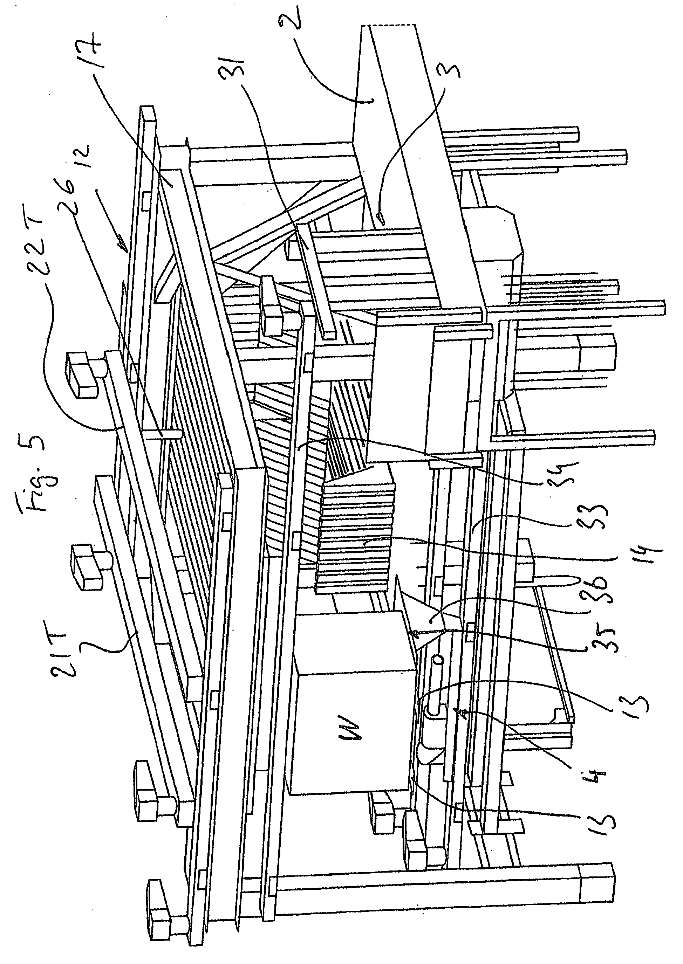

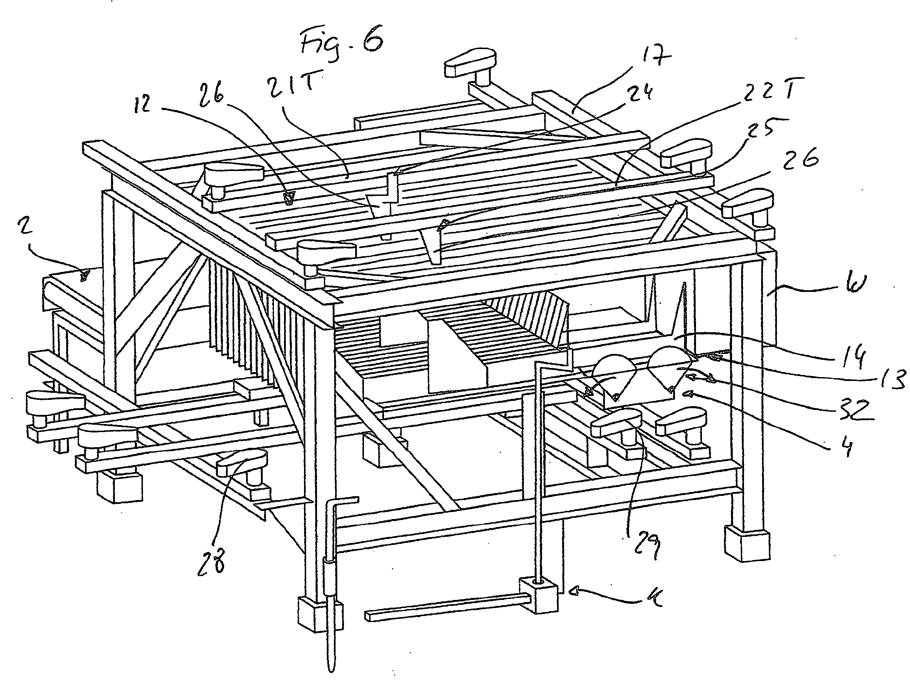

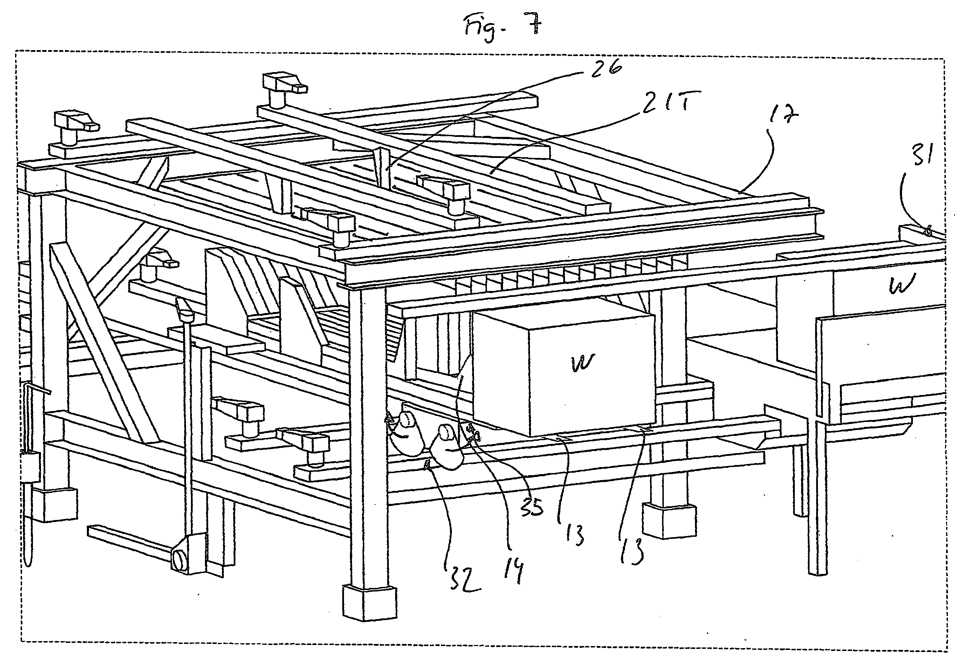

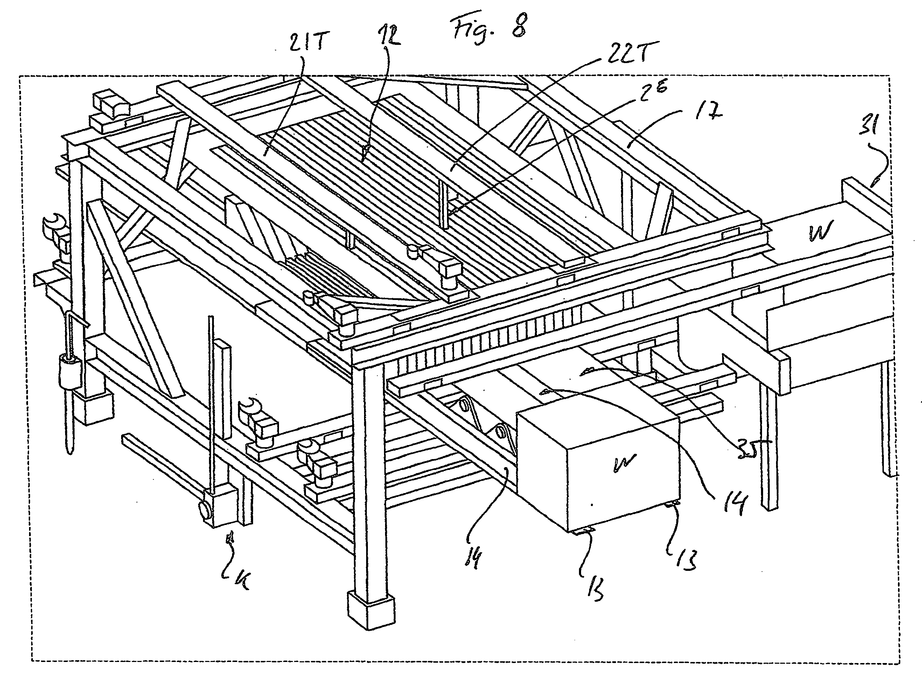

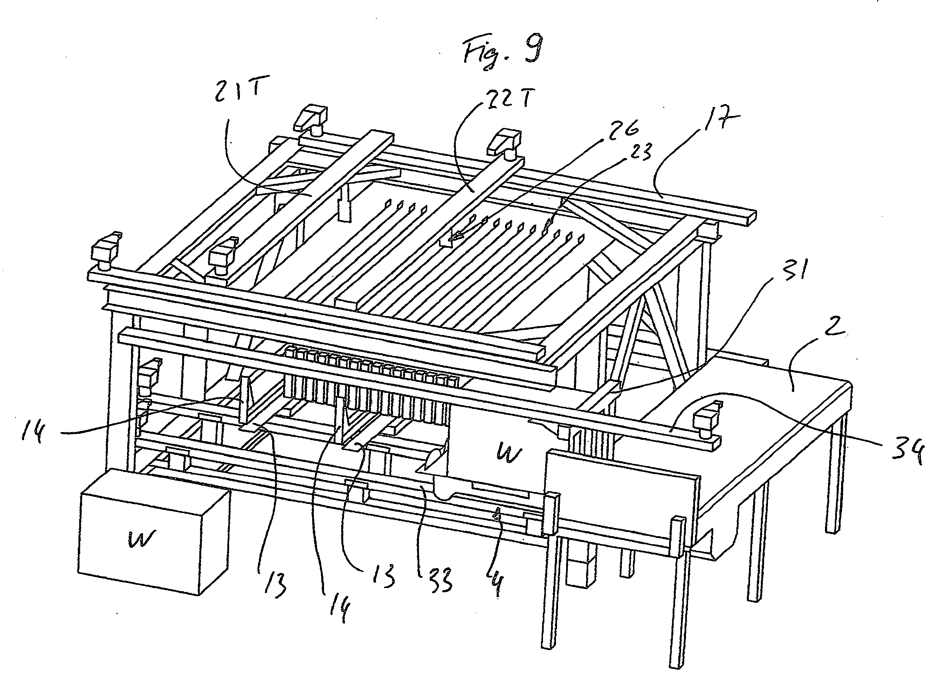

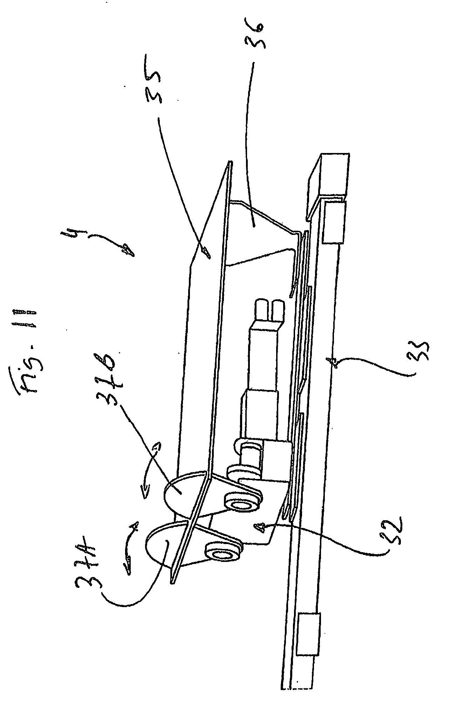

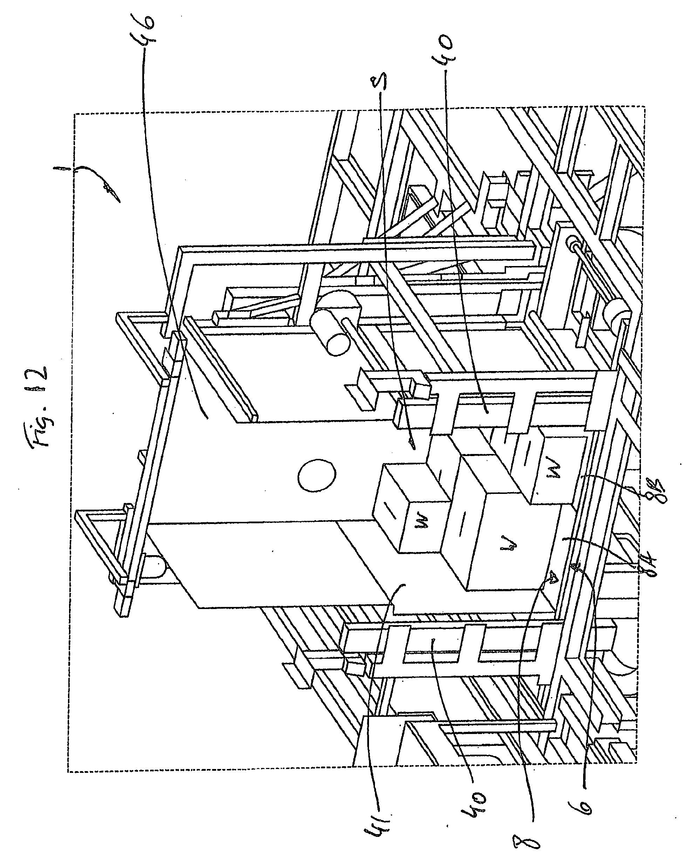

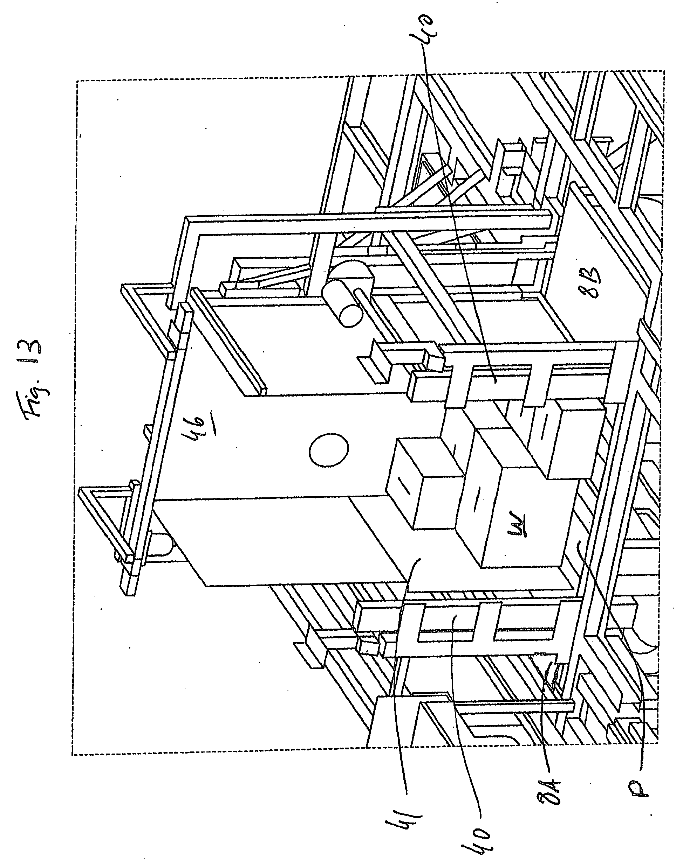

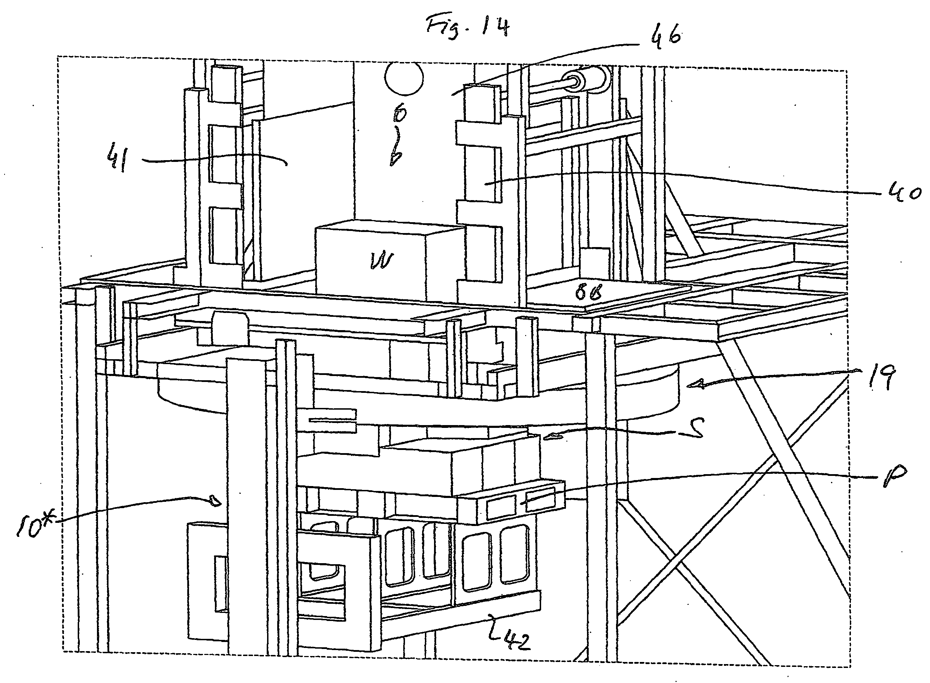

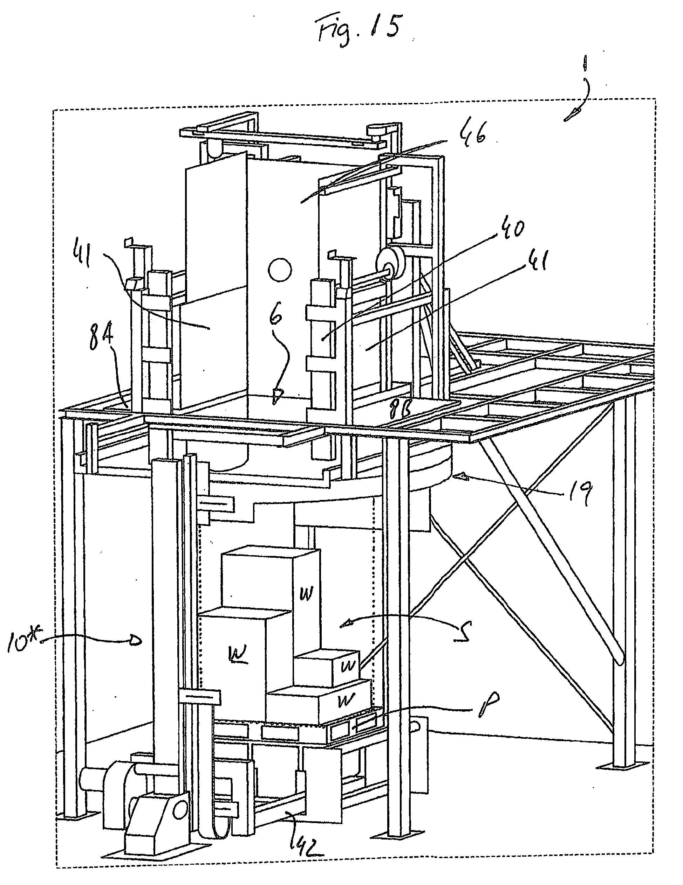

In den Figuren 1 bis 19 ist eine als Ganzes mit 1 bezeichnete Vorrichtung zum automatischen mehrlagigen Bestapeln von Paletten P mit Packstücken W unterschiedlichen Ausmaßes in einer vorbestimmten räumlichen Anordnung gezeigt. Es handelt sich also um eine Vorrichtung zum "mixed-case" Palettieren. Natürlich können mit der Vorrichtung 1 auch lediglich gleichartige Packstücke W palettiert werden.

Die Vorrichtung 1 umfasst einen Rollenförderer 2 als Zuführförderer, der die vereinzelten Packstücke W in einer rechnergestützten vorbestimmten Reihenfolge aus einem nicht gezeigten Lager bereitstellt.

Am Ende des Rollenförderers 2 ist ein als Pusher 3 ausgebildeter Umsetzer 31 angeordnet, der die Packstücke W um 90 Grad umsetzt und auf den nachfolgenden Positionierförderer abgibt. Dabei werden die Packstücke W ebenfalls winklig ausgerichtet, so dass sie soweit aufgrund ihrer äußeren Form möglich, auf dem Positionierförderer 4 ausgerichtet sind.

Der Positionierförderer 4 ist als Verfahrwagen ausgebildet. Durch Ihn werden die Packstücke W in X-Richtung positioniert, um diese Koordinate der späteren Position im Stapel einzunehmen.

Der Positionierförderer bzw. der Verfahrwagen oder genauer dessen Transportfläche ist horizontal auf selben Niveau und längs einer Seite des Platzes 6 für die Stapelbildung angeordnet. Üblicherweise wird hier der zu beladende Träger P (Palette) oder Rollwagen (R) angeordnet sein.

Auf dem Niveau der Transportfläche oberhalb des zu beladenden Trägers P ist eine Zwischenplatte 8 in dem Platz 6 vorgesehen. Die Zwischenplatte 8 ist derart mittig geteilt und jeder Teil 8A, B zur Seite hin (in X-Richtung) verschiebbar ausgestaltet, dass ein Stapel auf der Zwischenplatte 8 gebildet wird, während der komplett beladene Träger P des vorherigen Stapelvorgangs darunter gegen einen neuen leeren Träger P getauscht wird. Somit kann der Stapelvorgang ohne Unterbrechung fortgesetzt werden.

Zum Zuführen leerer Paletten bzw. Abführen bestapelter Paletten ist ein entsprechender Rollenförderer 9 unterhalb des Stapelplatzes 6 vorgesehen.

Von dem Rollenförderer wird die jeweilige Palette P von einer Hub- und Senkeinheit 10 zum Heben und Senken des Trägers P in Y-Richtung übernommen und nach oben zum Stapelplatz 6 gefahren. Die Hub- und Senkeinheit 10 ist auch für die Niveauanpassung beim Stapeln an sich zuständig, führt also falls nötig beim Stapeln eines Packstücks W einen Hub oder eine Absenkung aus und führt auch die Anpassung des Ausgleichs der Schichten beim Beginn einer neuen Schicht aus.

Von dem Verfahrwagen 4 wird das jeweilige Packstück W also auf die gewünschte Position in dem Stapel seitlich in den Platz 6 auf die Zwischenplatte 8 in Z-Richtung abgeschoben.

Für diese Verlagerung der Packstücke W an die vorherbestimmte Position im Stapel S umfasst die Vorrichtung Schiebeplatten 11 und eine Pusher-Batterie 12, also jeweils eine Mehrzahl von nebeneinander horizontal und längs der Seite des Stapelplatzes 6 bzw. der Palette P angeordnete einzelne Schiebeplatten 13 und einzelne Pusher 14. Die Schiebeplatten 13 greifen zwischen dem Gestell des Verfahrwagens 4 hindurch und übernehmen das durch den Pusher 14 abgeschobene Packstück W. Anschließend fahren der Pusher und die Schiebeplatte gemeinsam an die gewünschte Position und die Schiebeplatte 13 wird zurückgezogen, während der Pusher 14 zum Zurückhalten des Packstücks W stehen bleibt. Somit wird das Packstück W positioniert. Die Schiebeplatten 13 laufen vorne flach zu, so dass die Positionierung möglichst genau erfolgen kann.

Die Schiebeplatten 13 sind jeweils als horizontal und längs der Seite des Stapelplatzes 6 und quer dazu beweglich ausgebildete flache streifenförmige Platte ausgebildet, die in Richtung des Stapelplatzes 6 dünner zulaufen.

Die Schiebeplatten 13 sind auf der dem Träger gegenüberliegenden Seite des Verfahrwagens 4 aufgehängt und parallel und nebeneinander angeordnet. Sie sind jeweils auf einer in Z-Richtung ausgerichteten Linearachse 16 schlittenartig vor- und zurück beweglich. Der Antrieb erfolgt je Achse über einen Elektromotor 16E und einen Zahnriemen (nicht gezeigt), der an der Linearachse angeordnet ist und in den der Schlitten bzw. die Schiebeplatte 13 eingehängt ist.

Die Schiebeplatten 13 bilden somit quasi eine wahlweise Verbreiterung des Verfahrwagens 4 in den Stapelplatz 6 hinein aus.

Die Pusher 14 sind horizontal und längs der Seite des Stapelplatzes 6 bzw. des Trägers P miteinander fluchtend angeordnet sowie unabhängig voneinander verfahrbar ausgebildet. Sie sind auf der dem Träger gegenüberliegenden Seite des Positionierförderers angeordnet bzw. befinden sich dort in Ruhestellung, um über den Verfahrwagen 4 zum Abschieben von Packstücken auszufahren.

Die Pusher sind wie die Schiebeplatten auch über die gesamte Länge des Stapelplatzes 6 bzw. der Palette P angeordnet und an einem oberhalb des Positionierförderers aufgespanntem Gestell 17 befestigt. Dort sind sie jeweils auf einer Z-Richtung ausgerichteten Linearachse 18 schlittenartig vor- und zurück beweglich. Der Antrieb erfolgt je Achse über einen Elektromotor 18E und über einen Zahnriemen (nicht gezeigt), der an der Linearachse angeordnet ist und in den der Schlitten bzw. die Pusher 14 eingehängt ist.

Die Pusher 14 erstrecken sich von der jeweiligen Linearachse nach unten auf eine Höhe nur knapp oberhalb der Oberfläche des Verfahrwagens 4 und weisen am dortigen Ende einen flächig vergrößerten Fuß auf, um die Packstücke W besser und sicherer handzuhaben.

Unterhalb des Stapelplatzes 6 ist eine Einheit 19 zum Umwickeln des gebildeten Stapels S mit einer Folie vorgesehen.

Das Umwickeln erfolgt schichtweise nach und nach beim Bestapeln bzw. nach dem Bestapeln einer Schicht. Der Träger P mit den bereits gebildeten Schichten des Stapels S wird von der Hub- und Absenkeinheit 10, nach und nach, nach unten abgesenkt und fährt so durch die ringförmig ausgebildete Einheit 19 zum Umwickeln.

Ist der gesamte Stapel S fertig gestellt, wird der Stapel S auf die Palette P übergeben und nach unten gefahren und über den Rollenförderer 9 abtransportiert.

Gleichzeitig wird die Zwischenplatte 8 geschlossen und auf dieser weitergestapelt zur Ausbildung des nächsten Stapels des nächsten Auftrags.

Insgesamt wird also zum automatischen Stapeln von Packstücken W auf eine Palette P in einer vorbestimmten räumlichen Anordnung zur Ausbildung eines Stapels S rechnergestützt die Reihenfolge und räumlichen Position der Packstücke W auf der Palette P zur Errichtung eines Stapels S anhand des zugrunde liegenden Auftrags bestimmt.

Dann werden die Packstücke W in einer dazu benötigten vorbestimmten Reihenfolge mittels des Zuführförderers 2 aus einem Lager etc. vereinzelt ohne Hilfsmittel (Trays etc.) herbeigeschafft. Die zu verladenden Packstücke W werden anschließend von dem Zuführförderer 2 durch den Umsetzer 3 auf den Verfahrwagen 4 umgesetzt.

Mittels diesem und der Pusher-Batterie 12 und Schiebeplatten 13 wird das jeweilige Packstück W an die vorherbestimmte räumliche Position auf der Palette P bzw. dem Stapelplatz 6 oder Zwischenplatte 8 in dem sich bildenden Stapel transportiert.

Je nach Bedarf wird dabei die Palette P in Y-Richtung durch die entsprechende

Einheit 10 abgesenkt oder angehoben.

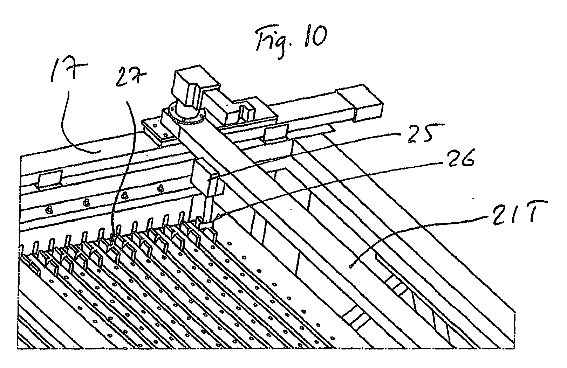

In Figur 10 ist erkennbar, dass die Einzel-Pusher der Pusher-Batterie jeweils keine eigenen Antriebe aufweisen.

Die Einzel-Pusher weisen zwei gemeinsame Antriebe 21, 22 auf, die wahlweise mit einem bestimmten Einzelpusher zu dessen Antrieb kuppelbar sind. Dazu sind die Antriebe 21, 22 in X-Richtung auf dem Gestell 17 oberhalb der Einzelpusher mittels einer Traverse 21T, 22T verfahrbar und mit dem Antriebsschlitten 23 der Einzel-Pusher 14 kuppelbar.

Der Antrieb 21, 22 weist jeweils einen eigentlichen Antriebsblock 24, 25 auf, der in Z-Richtung analog der obigen Ausgestaltung der Pusher verfahrbar ist. Um den jeweiligen Einzel-Pusher 14 anzutreiben weist der Antriebsblock 24, 25 eine in Richtung der Antriebsschlitten 23 weisende Kuppelnase 26 auf, die in eine quer zur X-Richtung verlaufende Nut 27 im Antriebsschlitten 23 eingreift.

Zum Antrieb eines bestimmten Einzel-Pushers wird der Antrieb 21 oder 22, je nach Einzel-Pusher, mittels der Traverse so verfahren, dass die entsprechende Kuppelnase 26 in die Nut 27 des jeweiligen Antriebsschlittens 23 eingreift. Anschließend wird der Antriebsblock 25 bzw. 25 verfahren und nimmt den Antriebsschlitten 23 bzw. den Einzel-Pusher 14 in Z-Richtung mit.

Die Einzelpusher sind also an einem Gestell aufgehangen, an dem sie in Z-Richtung auf den Stapel zu (oder weg) beweglich sind. Sie werden dazu von einem quer dazu, also in X-Richtung, verlaufenden oberhalb angeordneten Schlitten oder Traverse, der den Antrieb trägt, angefahren, wobei ein Kupplungs- oder Mitnehmerelement dabei die Wirkverbindung zwischen Antrieb und Einzelpusher herstellt.

Erkennbar ist auch, dass das Mitnehmerelement (Kuppelnase 26) dabei blatt- oder streifenförmig von dem Antrieb bzw. dessen Verfahrtraverse 21T, 22T nach unten hängt und in eine nach oben offene Nut 27 am Antriebsschlitten des bzw. der benachbarten Einzelpusher 14 eingreift, wozu der Mitnehmer 26 eine entsprechende Breite aufweist, so dass er durch entsprechende Positionierung entweder in die Nut 27 eines Einzelpushers oder in die zwei Nuten 27 benachbarter Einzelpusher 14 eingreifen kann.

Lediglich zwei Schiebeplatten 13 werden verwendet, die nun über einen Antrieb 28, 29 in X-Richtung entlang des Stapelplatzes 6 verfahrbar sind, so dass die jeweilige Schiebeplatte entsprechend eines Einzel-Pushers positioniert werden kann. Dazu ist die jeweilige Linearachse der Schiebeplatte analog einer Traverse verfahrbar ausgestaltet. Denkbar wäre auch eine der Einzelpusher-Batterie entsprechende Anordnung ohne X-Richtungsbewegung der Schiebeplatten.

Es ist auch möglich, beide Schiebeplatten gemeinsam anzusteuern, sodass ein Packstück W auf beiden Schiebeplatten gleichzeitig aufliegt. Offensichtlich kann dies mit entsprechender Ansteuerung und Verwendung von z.B. zwei Einzelpushern kombiniert werden.

Der Verfahrwagen 4 übernimmt von dem Zuführförderer 2 einzelne Packstücke W. Dazu schiebt der Umsetzer 31 die Packstücke vom Zuführförderer 2 auf den Verfahrwagen 4.

Der Verfahrwagen 4 weist einen beweglichen Anschlag 32 auf der abgewandten Seite auf, um ein Herabfallen der Packstücke 4 von der eigentlichen Transportfläche 35 zu verhindern und eine genau Positionierung zu erlauben. Damit das Packstück W beim Beschleunigen des Verfahrwagens 4 nicht herunterfällt, wird der Umsetzer 31 synchron mit Verfahrwagen 4 in X-Richtung bewegt, so dass das jeweilige Packstück auf dem Verfahrwagen 4 zwischen dem Anschlag 32 und dem Umsetzer 31 eingeklemmt transportiert wird
Zur Bewegung in X-Richtung sind Schienen 33 vorgesehen, auf denen der Verfahrwagen 4 zwischen Stapelplatz 6 und Pusher/Schiebeplatteneinheit beweglich ist. Parallel und oberhalb dazu ist eine entsprechende Schiene 34 für die synchrone Bewegung des Umsetzers 31 angeordnet. Die Schienen 33, 34 sind ebenso an dem Gestell 17 befestigt.

Der Verfahrwagen 4 ist mit einem C-förmigen Gestell 36 ausgebildet so dass dann die mindestens eine Schiebeplatte zwischen die Schenkel des "C" hindurchgreifen kann, so dass keine gegenseitige Behinderung ergibt.

Die eigentliche Trägerfläche 35 für das Packstück ist also nur an einer Seite an dem Fahrgestell des Verfahrwagens 4 befestigt und kragt von dort aus.

Der Anschlag 32 ist aus der Anschlagstellung weg bewegbar, vorzugsweise abklappbar bzw. verschwenkbar, so dass der Verfahrwagen nach erfolgter "Übergabe" des Packstücks an die Schiebeplatte (vgl. oben) bereits das nächste Packstück "holen" kann.

Der Anschlag ist 32 dazu um eine Achse aus der Anschlagstellung in eine Freigabestellung schwenkbar. Diese Ausführung benötigt wenig Platz und "kollidiert" auch nicht mit den Schiebeplatten. Der Anschlag weist zwei gegenläufig verschwenkbare Anschlagflügel auf, um einen breiten Anschlag bzw. Fläche bereitzustellen.

Dies erlaubt es auch, dass der Verfahrwagen nach erfolgter "Übergabe" des Packstücks W an die Schiebeplatte vor Beendigung des Stapelvorgangs bereits zurück zur Übernahme des nächsten Packstücks vom Zuführförderer 2 fährt.

Der Verfahrwagen 4 fährt also mit vom hochgeklappten Anschlag 32 und Umsetzer 31 eingeklemmten Packstück W an die jeweilige vorberechnete X-Position auf den Schienen 33.

Gleichzeitig verfahren die Traversen 21T, 22T für die Einzelpusher von links und von rechts in X-Richtung in die benötigte Position zur Wechselwirkung mit den Antriebsschlitten 27 der Einzelpusher 14, wobei der Mitnehmer 26 in die jeweilige Nut 27 eingreift. Ebenso werden die Schiebeplatten 13 in X-Richtung positioniert.

Dann findet wie beschrieben das Abschieben vom Verfahrwagen 4 (Positionierförderer) durch die Einzelpusher, vorliegend zwei Stück, auf die Schiebeplatten, vorliegend ebenfalls zwei Stück, statt, wozu der Antriebsblock 24, 25 entlang der Traverse in Z-Richtung verfährt und so den Einzelpusher 14 jeweils mitnimmt. Entsprechend werden die zwei Schiebeplatten 13 in Z-Richtung ausgefahren, um das Packstück W vom Verfahrwagen 4 zu übernehmen, wobei sie aufgrund des C-förmigen Gestells 36 durch den Verfahrwagen 4 "hindurchgreifen" können.

Sobald das Packstück W vollständig auf den Schiebeplatten ruht, wird der Anschlag 32 abgeklappt und der Verfahrwagen 4 kann zurück zur Übernahme fahren.

Der Anschlag 32 ist dabei durch zwei gegen bzw. im Uhrzeigersinn drehbare Anschlagscheiben 37A, B ausgebildet. Die Anschlagscheibe 37A wird gegen den Uhrzeigersinn und die Anschlagscheibe 37B im Uhrzeigersinn von der das Packstück W begrenzenden aufrechten Stellung nach unten verschwenkt oder abgeklappt, so dass der Verfahrwagen 4 frei ist.

Auch eine handbetriebene Kurbel K ist dargestellt, die den Mechanismus antreibt, um ein manuelles Eingreifen zu ermöglichen bzw. erleichtern, wozu das Gestell 17 (zusammen mit der Einheit aus Pusher und Schiebeplatten sowie Positionierförderer usw.) von dem Stapelplatz 6 weg bewegt wird.

Die Zwischenplatte 8 dient nicht nur zum Bilden der ersten Lage des Stapels S, sondern für den gesamten Stapel S. Dieser wird erst nach Fertigstellung komplett an die wartende Palette P übergeben, wobei die seitlichen Wände 41 als Abstreifer dienen.

Damit dies funktioniert, ist die Zwischenplatte 8 bzw. deren Teile 8A, B höhenveränderlich an einem Hubgestell 40 aufgehängt, so dass sich diese nach Fertigstellung einer Lage jeweils nach unten absenken lässt, damit das Stapelniveau sich auf Höhe des Positionierförderers befindet.

Ist der Stapel S fertig gestellt, werden die Teile 8A, B der Zwischenplatte 8 zur Seite hin unterhalb des Rands der seitlichen Wände 41 (in X-Richtung) bewegt, wobei die Packstücke bzw. der Stapel im Stapelplatz 6 verbleibt und nach vollständiger Entfernung der Zwischenplatte 8 auf die wartende Palette P zu ruhen kommt.

Die Palette P wird mit dem Stapel S beladen weiter abgesenkt und durchläuft (wie oben) eine Wickeleinheit 19 zum Umwickeln mit Stretchfolie zur Stabilisierung (vgl. Figuren 21 und 22).

Gleichzeitig wurde die Zwischenplatte 8 wieder geschlossen und eine neue Stapelbildung kann begonnen werden.

Anschließend wird die Palette mit dem Stapel von dem gabelartigen Träger 42 der Hub- und Absenkeinheit 10 auf einen Rollenförderer 9 zum Abtransport übergeben bzw. abgeladen. Die der Hub- und Absenkeinheit 10 entspricht weitestgehend der zuvor beschriebenen, ist jedoch nun ein Ein-Balken-Heber.

Anschließend wird eine neue leere Palette für den neuen Stapel aufgenommen und in die Wartestellung unterhalb der Zwischenplatte gehoben.

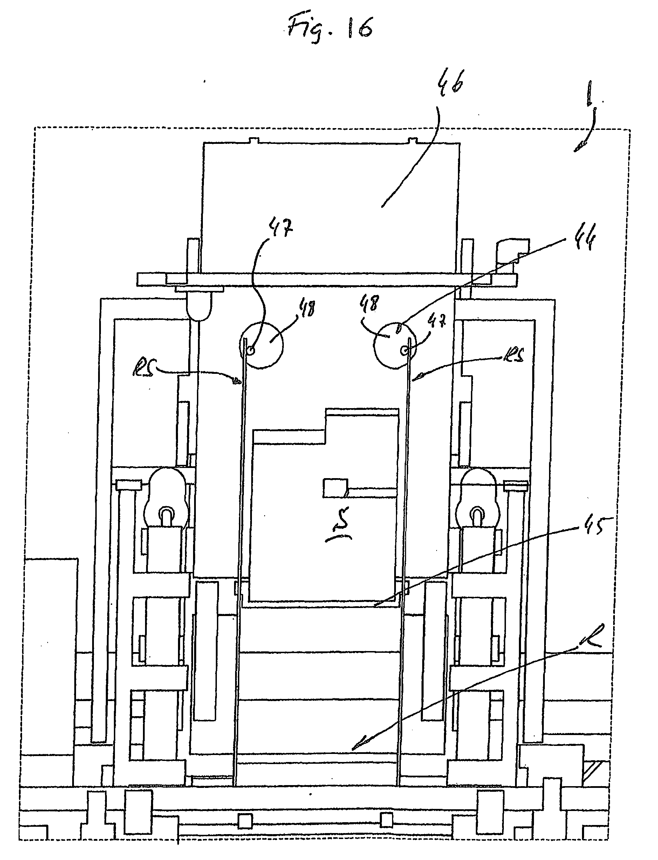

In den Figuren 16 bis 19 ist eine schematische perspektivische Ansicht auf die eben besprochene Vorrichtung zum automatischen mehrlagigen Bestapeln gezeigt, wobei nun ein Rollwagen R im Bereich des Stapelplatzes 6 beim Stapeln angeordnet ist.

Die Vorrichtung 1 eignet sich also nicht nur zum Beladen von Paletten P, sondern auch zum Beladen von Rollwagen R.

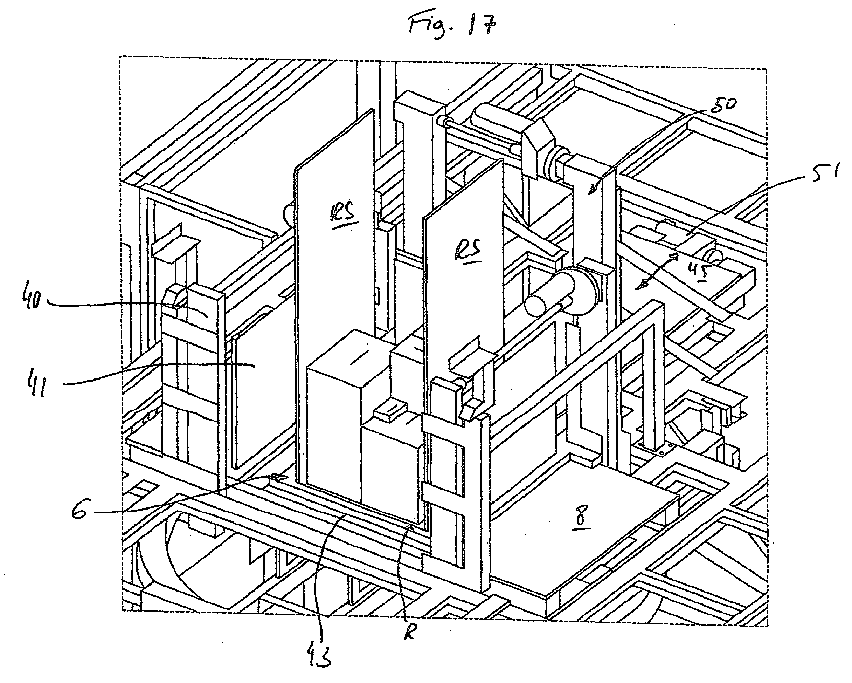

Die Rollwagen R werden dazu von demselben Förderer 9 zugeführt bzw. abtransportiert wie die Paletten. Dazu sind die Rollwagen R auf Trägerpaletten 43 (vgl. Figur 17) angeordnet, die sich wie normale Paletten handhaben lassen.

Die Rollwagen R werden ebenso von der Hub- und Absenkeinheit 10 von unten in den Stapelplatz 6 eingefahren.

Um die Seitenwände RS des Rollwagens R auseinanderzuspreizen, ist eine Aufspreizeinrichtung 44 vorgesehen, die die Seitenwände RS zumindest senkrecht oder sogar leicht schräg nach Außen aufgebogen während des Stapelns hält.

Die Seitenwände RS haben nämlich die Eigenschaft, sich nach Innen aufeinander zu zu bewegen.

Da die Seitenwände RS des Rollwagens R mit den Teilen 8A, B der Zwischenplatte korrespondieren und deren Einsatz somit nicht möglich ist, gibt es für die Bestapelung von Rollwagen R eine gesonderte und höhenverstellbare Zwischenplatte 45, die auf der dem Positionierförderer 2 abgewandten Seite des Stapelplatzes 6 angeordnet ist.

Sie wird nach Aufspreizen der Seitenwände RS von dieser Seite in den Rollwagen R in Z-Richtung mittels eines Antriebs 51 schlittenartig eingeführt. Die Zwischenplatte 45 ist zur Höhenverstellung analog der Zwischenplatte 8 an einem Hubgestell 50 aufgehangen.

Anschließend wird wie zuvor der Stapel S durch Ablegen der Packstücke W auf der Zwischenplatte 45 gebildet.

Als Abstreifer beim Übergeben des fertig gestapelten Stapels an den Rollwagen R durch Zurückziehen der weiteren Zwischenplatte 45 dient die hintere Seitenwand 46 (Diese ist zur besseren Übersicht in Figur 17 weggelassen). Die hintere Seitenwand 46 ist zudem Höhenverfahrbar, um den Hub bzw. das Absenken der Zwischenplatte 45 "mitzumachen", und in Richtung des Positionierförderers 2 bzw. Stapelplatzes 6 (Z-Richtung) beweglich, so dass unterschiedlich große Rollwagen verwendbar sind.

Die hintere Seitenwand 46 dient auch als Anbringungsort für die Aufspreizeinrichtung 44.

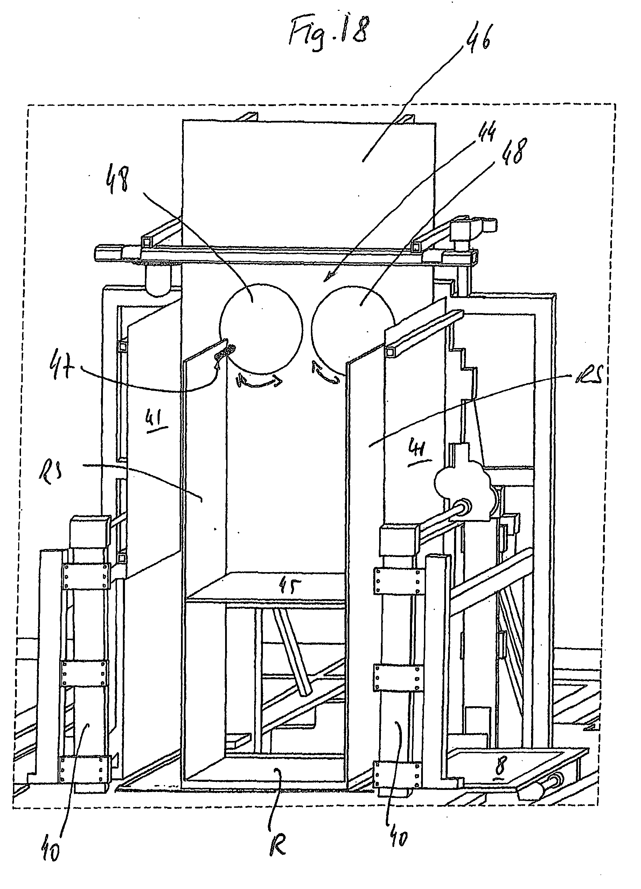

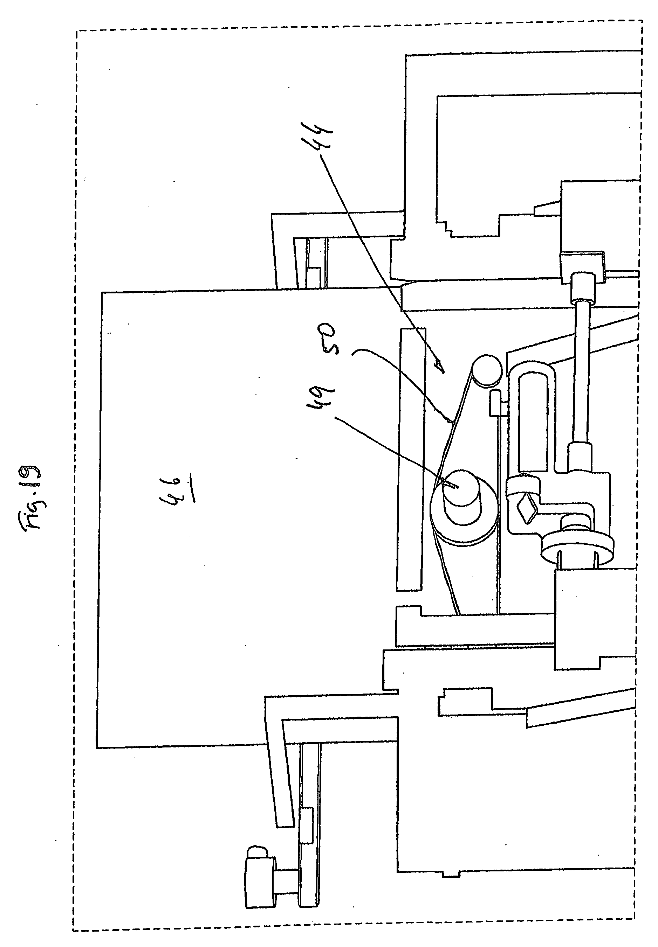

Die Aufspreizeinrichtung 44 besteht aus zwei auf gleicher Höhe im Bereich der erwarteten Seitenwände des Rollwagens R angeordneter von der Seitenwand nach vorne in den Rollwagenraum vorstehender Zapfen 47, die seitlich nach Außen zum Aufspreizen verlagerbar sind. Dazu sind die Zapfen 47 jeweils auf einer vertikal ausgerichteten Drehscheibe 48 angeordnet, die von einem gemeinsamen Antrieb 49 über ein Umlaufendes Seil angetrieben werden. Der Antrieb ist dabei auf der Rückwand der hinteren Seitenwand 46 angeordnet (vgl. Figur 18 und 19).

Beim Einführen des Rollwagens stehen die Zapfen 47 also innen. Nach dem Einführen werden sie mittels einer Drehung der Drehscheiben 48 nach Außen verlagert und spreizen somit die Seitenwände RS auf.

Ist der Stapelvorgang beendet, werden die Zapfen 47 wieder nach Innen verlagert und die Zwischenplatte 45 an der als Abtreifer dienenden hinteren Seitenwand 46 zurückgezogen, so dass der Stapel S der Packstücke W auf dem Rollwagen R zu liegen kommt.

Anschließend wird dieser mittels der Hub- und Absenkeinheit 10 durch die

Folienwickeleinheit 19 und letztendlich auf dem Rollenförderer 9 zum Abtransport bewegt.

Danach kann der Vorgang von neuem beginnen.

## Patentansprüche

1. Vorrichtung zum automatischen Stapeln von Packstücken auf einer Unterlage in einer vorbestimmten räumlichen Anordnung zur Ausbildung eines Stapels mit
- mindestens einem Zuführförderer, der die vereinzelten Packstücke (W) in einer vorbestimmten Reihenfolge bereitstellt;
- mit einer Hub- und Senkeinheit zum Heben und Senken einer in einem Stapelplatz (6) angeordneten Unterlage (P, 8) in Y-Richtung;
- mit an einem Abgabeende des Zuführförderers angrenzenden Verlagerungsmitteln, die Packstücke (W) von dem Zuführförderer (2) übernehmen und an die vorherbestimmte Position im Stapel (S) transportieren;
wobei die Verlagerungsmittel umfassen:
- einen an dem Abgabeende des Zuführförderers angrenzenden Positionierförderer (4), der horizontal und längs zu einer Seite des Stapelplatzes (6) angeordnet ist, um die Packstücke (W) in X-Richtung zu positionieren,
- mindestens eine Schiebeplatte (13) und einen Pusher (14), um die Packstücke (W) von dem Positionierförderer in Z-Richtung an die vorherbestimmte Position im Stapel (S) zu transportieren,
wobei die mindestens eine Schiebeplatte als horizontal und längs der Seite des Stapelplatzes (6) und quer dazu beweglich ausgebildete flache streifenförmige Platte ausgebildet ist, um die Packstücke (W) beim Abschieben der Packstücke (W) durch den Pusher von dem Positionierförderer an der X-Richtungsposition zu übernehmen und in Z-Richtung auf der Unterlage (P, 8, 45) oder in dem Stapel (S) abzulegen, **dadurch gekennzeichnet, dass** der Positionierförderer als Verfahrwagen ausgebildet ist.

2. Vorrichtung nach Anspruch 1, **dadurch gekennzeichnet, dass** in X-Richtung längs des Stapelplatzes bzw. der Unterlage Schienen für den Verfahrwagen angeordnet sind.

3. Vorrichtung nach Anspruch 1 oder 2, **dadurch gekennzeichnet, dass** der Verfahrwagen mit einem C-förmigen Gestell ausgebildet ist.

4. Vorrichtung nach einem der vorhergehenden Ansprüche, **dadurch gekennzeichnet, dass** der Verfahrwagen auf der in X-Richtung dem Zuführförderer abgewandten Seite einen Anschlag aufweist.

5. Vorrichtung nach Anspruch 4, **dadurch gekennzeichnet, dass** der Anschlag aus der Anschlagstellung weg bewegbar ausgestaltet ist.

6. Vorrichtung nach Anspruch 5, **dadurch gekennzeichnet, dass** der Anschlag um eine Achse aus der Anschlagstellung in eine Freigabestellung schwenkbar ist.

7. Vorrichtung nach einem der Ansprüche 4 bis 6, **dadurch gekennzeichnet, dass** der Anschlag zwei gegenläufig verschwenkbaren Anschlagflügel aufweist.

8. Vorrichtung nach einem der vorhergehenden Ansprüche, **dadurch gekennzeichnet, dass** der Positionierförderer (4) am Gestell (17) befestigt ist.

9. Vorrichtung nach Anspruch 8, **dadurch gekennzeichnet, dass** das Gestell (17) verfahrbar ausgestaltet ist.

## Claims

1. Apparatus for automatically stacking packages on a support in a predetermined spatial arrangement for forming a stack including
- at least one supply conveyor, which provides the individual packages (W) in a predetermined sequence;
- a raising and lowering unit for raising and lowering a support (P, 8) arranged in a stacking location (6) in the Y direction;
- shifting means, which is adjacent to a delivery end of the supply conveyor and accepts the packages (W) from the supply conveyor (2) and transports them to the predetermined position in the stack (S);
wherein the shifting means include:
- a positioning conveyor (4), which is adjacent to a delivery end of the supply conveyor and is arranged horizontally and alongside one side of the stacking location (6) in order to position the packages (W) in the X direction,
- at least one sliding plate (13) and a pusher (14) in order to transport the packages (W) from the positioning conveyor in the Z direction to the predetermined position in the stack (S),
wherein the at least one sliding plate is constructed in the form of a flat, strip-shaped plate constructed to be movable horizontally and along the side of the stacking location (6) and transversely thereto, in order to accept the packages (W) whilst the packages are pushed by the pusher from the positioning conveyor to the X direction position and to deposit them in the Z direction on the support (P, 8, 45) or in the stack (S),
**characterised in that** the positioning conveyor is constructed in the form of a transfer carriage.

2. Apparatus as claimed in Claim 1, **characterised in that** rails for the transfer carriage are arranged in the X direction alongside the stacking location or the support.

3. Apparatus as claimed in Claim 1 or 2, **characterised in that** the transfer carriage is constructed with a C-shaped frame.

4. Apparatus as claimed in one of the preceding claims, **characterised in that** the transfer carriage includes an abutment on the side remote from the supply conveyor in the X direction.

5. Apparatus as claimed in Claim 4, **characterised in that** the abutment is constructed to be movable away from the abutment position.

6. Apparatus as claimed in Claim 5, **characterised in that** the abutment is pivotable about an axis out of the abutment position into a disengagement position.

7. Apparatus as claimed in one of Claims 4 to 6, **characterised in that** the abutment includes two abutment wings pivotable in opposite directions.

8. Apparatus as claimed in one of the preceding claims, **characterised in that** the positioning conveyor (4) is fastened to the frame (17).

9. Apparatus as claimed in Claim 8, **characterised in that** the frame (17) is constructed to be movable.

## Revendications

1. Dispositif d'empilage automatique de paquets sur un support selon une disposition spatiale prédéterminée pour former une pile, comprenant
- au moins un convoyeur d'acheminement qui achemine les paquets isolés (W) dans un ordre prédéterminé ;
- une unité de levage et d'abaissement servant à lever et abaisser dans la direction Y un support (P, 8) disposé dans un emplacement d'empilage (6) ;
- des moyens de déplacement qui sont adjacents à une extrémité de décharge du convoyeur d'acheminement et qui prennent en charge des paquets (W) sur le convoyeur d'acheminement (2) et les transportent à la position prédéterminée dans la pile (S) ; les moyens de déplacement comprenant :
- un convoyeur de positionnement (4) qui est adjacent à l'extrémité de décharge du convoyeur d'acheminement et qui est disposé horizontalement et longitudinalement par rapport à un côté de l'emplacement d'empilage (6) pour positionner les paquets (W) dans la direction X,
- au moins une plaque coulissante (13) et un poussoir (14) pour transporter les paquets (W) du convoyeur de positionnement dans la direction Z à la position prédéterminée dans la pile (S),
l'au moins une plaque coulissante étant configurée sous la forme d'une plaque plate en forme de bande configurée pour être mobile horizontalement et longitudinalement par rapport au côté de l'emplacement d'empilage (6) et transversalement à celui-ci pour prendre en charge les paquets (W) sur le convoyeur de positionnement à la position de direction X, lorsque les paquets (W) sont poussés par le poussoir, et les déposer dans la direction Z sur le support (P, 8, 45) ou dans la pile (S), **caractérisé en ce que** le convoyeur de positionnement est configuré en un chariot de déplacement.

2. Dispositif selon la revendication 1, **caractérisé en ce que** des rails destinés au chariot de déplacement sont disposés dans la direction X longitudinalement par rapport à l'emplacement d'empilage ou du support.

3. Dispositif selon la revendication 1 ou 2, **caractérisé en ce que** le chariot de déplacement est formé avec un cadre en forme de C.

4. Appareil selon l'une des revendications précédentes, **caractérisé en ce que** le chariot de déplacement comporte une butée du côté opposé au convoyeur d'acheminement par référence à la direction X.

5. Dispositif selon la revendication 4, **caractérisé en ce que** la butée est configurée pour être mobile depuis la position de butée.

6. Dispositif selon la revendication 5, **caractérisé en ce que** la butée peut pivoter sur un axe de la position de butée dans une position de libération.

7. Dispositif selon l'une des revendications 4 à 6, **caractérisé en ce que** la butée comprend deux ailettes pivotantes dans des sens opposés.

8. Dispositif selon l'une des revendications précédentes, **caractérisé en ce que** le convoyeur de positionnement (4) est fixé au cadre (17).

9. Dispositif selon la revendication 8, **caractérisé en ce que** le cadre (17) est configuré pour être mobile.
